# EUROPEAN PATENT SPECIFICATION

(11) **EP 2 995 165 B1**
(45) Date of publication and mention of the grant of the patent: **26.05.2021**
(21) Application number: 14738586.8
(22) Date of filing: 30.04.2014
(51) Int. Cl.: H04L 29/06, H04W 12/0433, H04W 76/12

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 10.05.2013 CN 201310172942
(43) Date of publication of application: 16.03.2016
(73) Proprietor: Alcatel Lucent, 91620 Nozay (FR)
(72) Inventor: WANG, Yonggang, Shanghai 201206 (CN)
(74) Representative: Novagraaf Technologies
(86) International application number: PCT/IB2014/000961
(87) International publication number: WO 2014/181178

(56) References cited:
- EP-A1- 1 455 474
- EP-A2- 2 498 566
- "3rd Generation Partnership Project; Technical Specification Group Radio Access Network; Evolved Universal Terrestrial Radio Access (E-UTRA); Radio Resource Control (RRC); Protocol specification (Release 11)", 3GPP DRAFT; 36331-B30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15 March 2013 (2013-03-15), XP050698900, Retrieved from the Internet: URL:http://www.3gpp.org/ftp/tsg_ran/WG2_RL 2/Specifications/201303_final_specs_after_ RAN_59/ [retrieved on 2013-03-15]
- ALCATEL LUCENT: "pCR to TR 33.868: MTCe Connectionless Solution: Security solution", 3GPP DRAFT; S3-130524 PCR MTCE CONNECTIONLESS SECURITY SOLUTION(R4), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. SA WG3, no. Valencia, Spain; 20130408 - 20130412 14 April 2013 (2013-04-14), XP050709755, Retrieved from the Internet: URL:http://www.3gpp.org/ftp/tsg_sa/WG3_Sec urity/TSGS3_71_Valencia/Docs/ [retrieved on 2013-04-14]

## Description

### Field of the Invention

The present invention relates to the field of communications, and particular to a data transmission method and device.

### Background of the Invention

In order to reduce signaling overhead caused by conversion from an idle mode to a radio source control connected (RRC CONNECTED) mode, a solution currently adopted in the industry comprises transferring a small amount of data (hereinafter referred to as "small data") while the UE has no NAS signaling connection. Two alternatives are described in TR23.887. Both alternatives are based on the principle of providing information to the UE about the bearer end-point(s) of a public data network PDN Connection(s) in a signaling gateway (e.g., S-GW).

A tunneling concept is used in the solution in which a base station (e.g., an eNB) could directly forward small data to S-GW without bearer setup and without involving mobility management entity (MME). eNB identifies a special packet by the encryption of a protocol data unit (PDU) from a user equipment (UE), and then applies the forwarding.

Based on a pre-configured evolution packet system (EPS) bearer(s) or PDN connection(s) (which are enabled during MM and SM procedure), the UE will use a Bearer Resource ID ("Small Data Fast Path" TR23.887v0.8.0 section 5.1.1.3.6.2) or Connection ID ("Connectionless Data Transmission" TR23.887v0.8.0 section 5.1.1.3.6.3) to activate its EPS bearer or PDN connection.

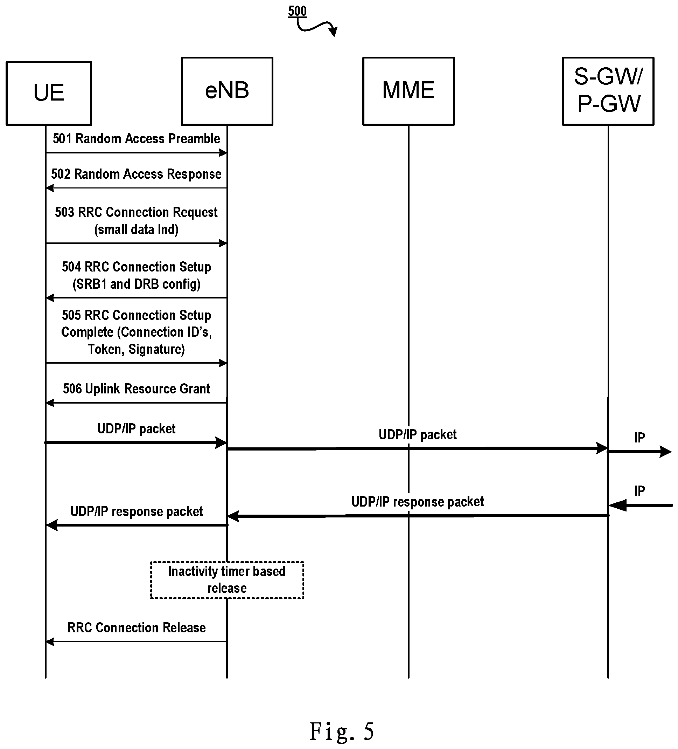

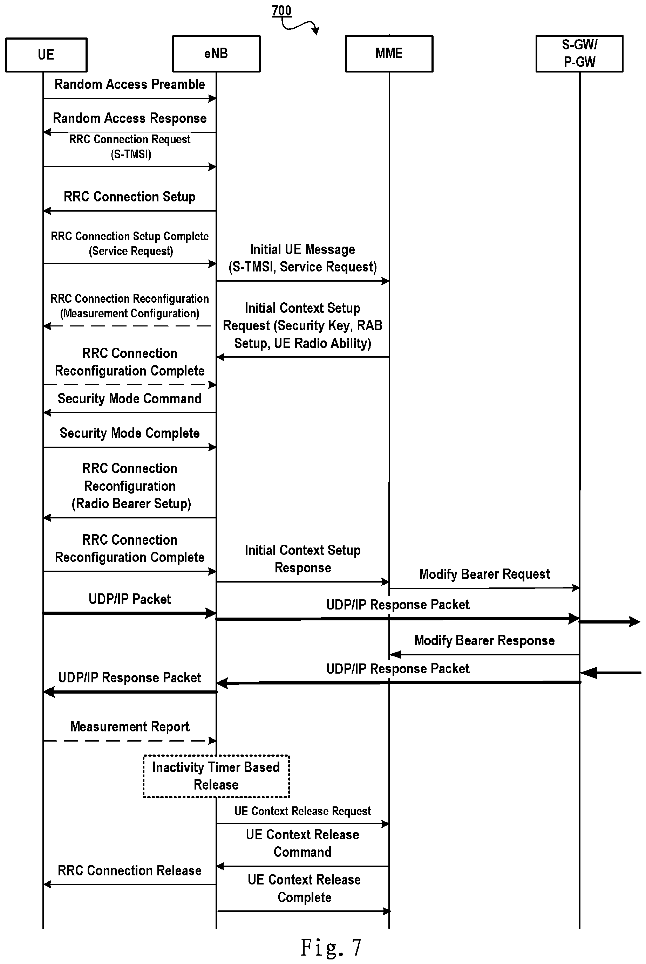

Currently, RAN schemes for the connectionless approaches are still open for RAN2. In the current schemes, for example, Fig.5.1.1.3.1.1-2 of 3GPP TR 23.887v0.9.0, Machine-Type and other Mobile Data Applications Communications Enhancements illustrates an LTE message sequence for the transfer of one IP packet pair, as shown by the message sequence 700 in Fig.7. As can be seen from Fig.7, the prior art separately performs RRC connection establishment, DRB setup and security handling procedure respectively, which requires transmission of a lot of signaling, and which might cause issues such as a large resource consumption and a low handling speed.

Therefore, there is a need for a solution which can reduce signaling overhead during the conversion from an idle mode to a radio source control connected (RRC CONNECTED) mode. EP 1 455 474 A1 discloses a method for implementing security communication by independently selecting an encryption algorithm. In this method, a bit for representing Cl is added, and a judge process for the CI and encryption algorithm supported by both the current subscriber and network is added.

EP 2 498 566 A2 relates to a method and apparatus for transmitting data in a wireless communication network. A base station having information of idle mode user equipment transmits a connecting operation mode to user equipment when the idle mode user equipment is connected to the base station.

Document ALCATEL LUCENT: "pCR to TR 33.868: MTCe Connectionless Solution: Security solution" describes a problem similar to that of the application, but proposes a different solution: a 'two message' approach and applying security to the RRC Connection Setup Complete message.

### Summary of the Invention

In view of the above problems, the present invention provides a data transmission solution, which can effectively reduce signaling during the conversion from an idle mode to the RRC CONNECTED mode, lower the signaling overhead and thereby improve the handling speed and reduce resource consumption.

The invention is defined in the independent claims. Additional features of the invention are provided in the dependent claims.

### Brief Description of the Drawings

Other objects and effects of the present invention will be more apparent and easy to understand by means of the following description with reference to figures and more comprehensive understanding of the present invention, wherein:
Fig.1 is a flow chart of a data transmission method 100 according to an embodiment of the present invention;
Fig.2 is a flow chart of a data transmission method 200 according to an embodiment of the present invention;
Fig.3 is a block diagram of a data transmission device 300 according to an embodiment of the present invention;
Fig.4 is a block diagram of a data transmission device 400 according to an embodiment of the present invention;
Fig.5 is a schematic diagram of a data transmission message sequence 500 in a mobile originated (MO) situation according to an embodiment of the present invention;
Fig.6 is a schematic diagram of a data transmission message sequence 600 in a mobile terminated (MT) situation according to an embodiment of the present invention; and
Fig.7 is an LTE message sequence 700 for the transmission of an IP packet pair according to the prior art.

In all of the above figures, identical reference numbers denote identical, like or corresponding features or functions.

### Detailed Description

Embodiments of the present invention will be illustrated and described below in more detail with reference to the figures. It should be understood that the figures and embodiments of the present invention are only intended for exemplary illustration purpose, and not for limiting the protection scope of the present invention.

The flowcharts and block diagrams in the figures illustrate the method, system, as well as architecture, functions and operations executable by a computer program product according to the embodiments of the present invention. In this regard, each block in the flowcharts or block diagrams may represent a module, a program segment, or a part of code, which contains one or more executable instructions for performing specified logic functions. It should also be noted that, in some alternative implementations, the functions noted in the block may occur out of the order noted in the figures. For example, two blocks shown consecutively may be performed in parallel substantially or in an inverse order. It should also be noted that each block in the block diagrams and/or flow charts and a combination of blocks in block diagrams and/or flow charts may be implemented by a dedicated hardware-based system for executing a prescribed function or operation or may be implemented by a combination of dedicated hardware and computer instructions. It should be understood that the figures and embodiments of the present invention are only intended for exemplary illustration purpose, and not for limiting the protection scope of the present invention. The present invention will be illustrated and described below in more detail with reference to the figures.

In the present invention, user equipment (UE) may be various terminals such as mobile phone, personal digital assistant (PDA), portable computer, or any other proper terminals having the mobile communication function. A base station for example may be a node B, eNodeB (eNB), access point (AP), radio access station (RAS) and the like.

It should be noted that although embodiments of the present invention are described mainly by using a long-term evolution (LTE) system as an example, this is only exemplary, and that the technical solution of the present invention may completely applied to other suitable systems, such as universal mobile telecommunications system (UMTS).

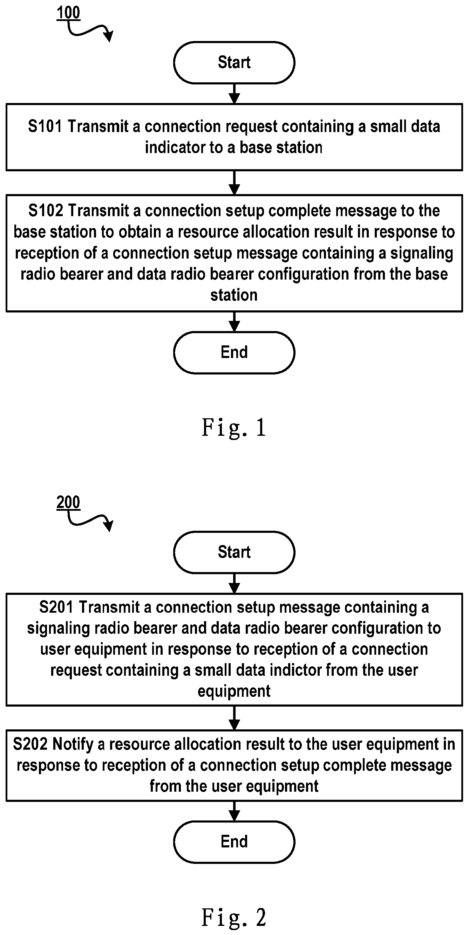

Fig.1 is a flow chart of a data transmission method 100 according to an embodiment of the present invention. The embodiment shown in Fig.1 may be implemented by user equipment or any other suitable equipment available for those skilled in the art.

At step S101, a connection request containing a small data indicator is transmitted to a base station.

According to an embodiment of the present invention, the connection request may be for example an RRC Connection Request. At the beginning of the RRC Connection establishment procedure, UE may transmit a random access preamble to the base station and originates the RRC Connection Request after receiving a random access response from the base station, as in the existing manner. For example, in the message sequence under a mobile-originated (MO) scenario shown in Fig.5, the UE transmits 501 a random access preamble to eNB, then the eNB transmits 502 a random access response to the UE, and then the UE transmits 503 the RRC Connection Request to the base station.

It should be noted that different from the existing RRC Connection Request, the RRC Connection Request according to the present invention contains a small data indicator which indicates that small data transmission will be performed.

In the context of the present invention, "small data" may represent data in a smaller amount, e.g., monitoring data of temperature, air pressure, hydrology and the like. In addition, the term "data" mentioned in the embodiments of the present invention is interchangeable with the term "small data" in some cases.

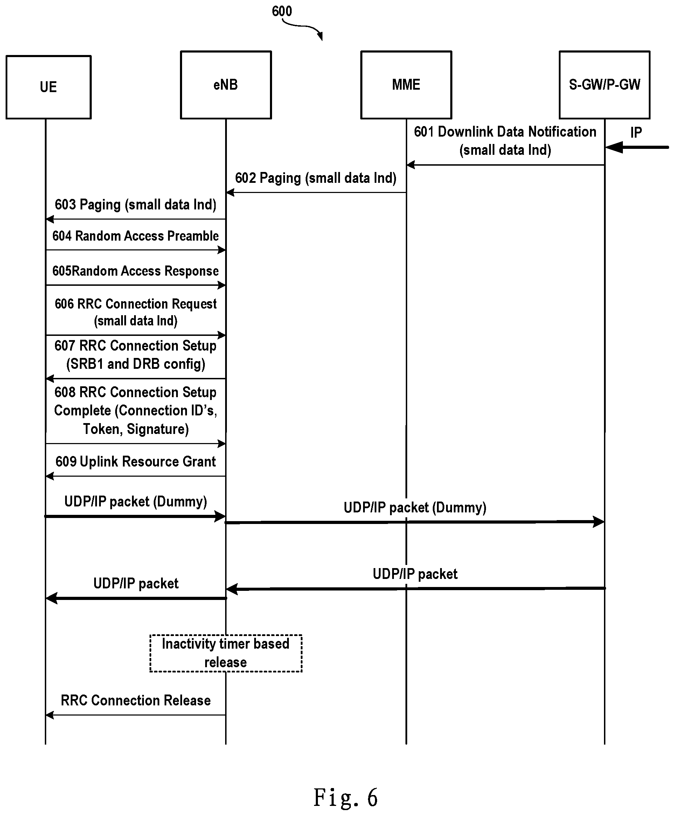

According to the embodiment of the present invention, the procedure of transmitting a connection request containing a small data indicator to the base station may comprise the following steps: transmitting an access preamble to the base station in response to reception of a paging message containing the small data indictor from the base station; and transmitting a connection request to the base station in response to reception of the response to the access preamble from the base station. For example, in the message sequence under a mobile terminated (MT) scenario shown in Fig.6, S-GW or P-GW transmits 601 to MME a downlink data notification containing the small data indicator to indicate that transmission of the small data is to be performed; the MME transmits 602 a paging notification to the eNB according to the downlink data notification, the paging notification also containing the small data indicator; in response to the paging notification, the eNB transmits a paging message 603 containing the small data indicator to the UE, to indicate that transmission of the small data is to be performed; upon reception of the paging message, the UE may transmit 604 a random access preamble to the base station, and originates 606 an RRC Connection Request containing the small data indicator after reception of a random access response transmitted 605 from the base station.

At step S102, in response to reception of a connection setup message containing a signaling radio bearer and data radio bearer configuration from the base station, a connection setup complete message is transmitted to the base station to obtain a resource allocation result.

In an embodiment according to the present invention, after the connection request containing the small data indicator is transmitted to the base station, the base station may transmit to the user equipment a connection setup message, e.g., an RRC connection setup message, and the message may contain a signaling radio bearer (SRB) and data radio bearer (DRB) configuration. The user equipment may extract the signaling radio bearer (SRB) and data radio bearer (DRB) configuration from the connection setup message, then transmit the connection setup complete message to the base station.

In the LTE system, since the UE may obtain the configuration and resource of SRB0 in an RRC idle state, the signaling radio bearer obtained between the UE and the eNB during the RRC connection establishment procedure usually refers to SRB1. However, it should be understood that the technical solution of the present invention may be applied to the LTE system but not limited to the LTE system, and in other systems where the technical solution of the present invention may be applied, the signaling radio bearer contained in the connection setup complete message may be other specific content other than SRB1.

According to an embodiment of the present invention, the connection setup complete message may comprise one or more kinds of information. In the present invention, the connection setup complete message comprises a security identifier, wherein the security identifier is associated with a used encryption algorithm and a key of the encryption algorithm. In an embodiment of the present invention, a security mode list may be stored or saved at the user equipment and the base station respectively. In this list, there may be one or more security identifiers. Each security identifier is unique and respectively identifies a specific encryption algorithm and a key used by the encryption algorithm. These encryption algorithms and keys used by them may be those which are once used by the user equipment in a past period of time, and be cached in both of the base station and the user equipment. By transmitting the security identifier, a corresponding encryption algorithm and a key used by it may be determined at both the user equipment and the base station, thereby reducing the transmitted content and improving the transmission efficiency.

In the embodiment according to the present invention, the current RAN security policy may be reused. The security identifier may be a "token" allocated by the eNB. The token may indicate UE security context associated with the eNB, e.g., the encryption algorithm and the key used by it. After the UE becomes idle, the security context is cached into the eNB and UE. The token is transmitted to the eNB in the RRC connection setup complete message as an index to the context.

In another embodiment of the present invention, the connection setup complete message may further comprise a connection identifier, wherein the connection identifier may represent an identifier of a tunnel which is once established by the base station and the gateway.

UE needs to pass to the eNB a Connection identifier that the S-GW has passed to the UE via the MME at PDN connection setup time, so that the eNB can select an appropriate S-GW IP address and an appropriate tunnel end-point identifier (TEID) for uplink traffic. According to an embodiment of the present invention, the connection identifier is carried in the RRC connection setup complete message, or may be carried in subsequent data packet transmission and not necessarily carried in the connection setup complete message.

In a further embodiment of the present invention, the connection setup complete message may further comprise a signature, wherein the signature may contain the identifier of the user equipment transmitting the connection setup complete message to the base station. It should be noted that the signature is optional for the connection setup complete message, and not necessarily contained in the connection setup complete message.

In the message sequence under a mobile-originated (MO) scenario shown in Fig.5, after the UE transmits 503 a RRC connection request to the eNB, the eNB transmits 504 to the UE an RRC connection setup message containing the SRB1 and DRB configuration; in response to the RRC connection setup message, the UE transmits 505 to the eNB an RRC connection setup complete message which contains a security identifier, connection identifier and signature, so that the eNB allocates resources according to these information to perform subsequent data transmission. Thereafter, data transmission may be performed between the UE and eNB and S-GW/P-GW, as shown in the transmission of UDP/IP packet in Fig.5. After data transmission is not performed for a period of time, resource may be released based on an inactivity timer and the RRC connection may be released.

In the message sequence under a mobile-terminated (MT) scenario shown in Fig.6, after the UE transmits 606 an RRC connection request to the eNB, the eNB transmits 607 to the UE an RRC connection setup message containing the SRB1 and DRB configuration; in response to the RRC connection setup message, the UE transmits 608 to the eNB an RRC connection setup complete message which contains a security identifier, connection identifier and signature, so that the eNB allocates resources according to these information to perform subsequent data transmission. Thereafter, data transmission may be performed between the UE and eNB and S-GW/P-GW, as shown in the transmission of UDP/IP packet in Fig.6. After data transmission is not performed for a period of time, resource may be released based on an inactivity timer and the RRC connection may be released.

Fig.2 is a flow chart of a data transmission method 200 according to an embodiment of the present invention. The embodiment shown in Fig.2 may be implemented by a base station or any other suitable equipment available for those skilled in the art.

At step S201, in response to reception of a connection request containing the small data indictor from user equipment, a connection setup message containing a signaling radio bearer and data radio bearer configuration is transmitted to the user equipment.

In the message sequence under a mobile-originated (MO) scenario shown in Fig.5, after the eNB receives the RRC connection request transmitted 503 by the UE to the base station, the eNB transmits 504 the RRC connection setup message to the UE. Since transmission of and response to a random access preamble is usually performed between the UE and the eNB, the example shown by Fig.5 (similarly in Fig.6) illustrates that the UE transmits 501 the random access preamble, and the base station transmits 502 the random access response to the UE.

According to the embodiment of the present invention, the method 200 may further optionally comprise the following steps: in response to reception of a paging notification containing the small data indicator from a mobility management entity, transmitting a paging message containing the small data indicator to the user equipment. In an embodiment of the present invention, the paging notification may be transmitted by the mobility management entity to the base station in response to a downlink data notification containing the small data indicator from a gateway. In addition, the user equipment may transmit an access preamble to the base station in response to reception of the paging message from the base station, and may transmit the connection request to the base station in response to reception of the response to the access preamble from the base station.

In the message sequence under a mobile terminated (MT) scenario shown in Fig.6, S-GW or P-GW transmits 601 to MME a downlink data notification containing the small data indicator to indicate that transmission of the small data is to be performed; the MME transmits 602 a paging notification to the eNB according to the downlink data notification, the paging notification also containing the small data indicator; in response to the notification, the eNB transmits 603 a paging message containing the small data indicator to the UE, to indicate that transmission of the small data is to be performed; upon reception of the paging message, the UE may transmit 604 a random access preamble to the eNB, and originates an RRC connection request 606 containing the small data indicator after reception of a random access response transmitted 605 from the eNB; in response to the RRC connection setup message, the eNB transmits an RRC connection setup message 607 to the UE, the RRC connection setup message containing a signaling radio bearer and data radio bearer configuration.

At step S202, in response to reception of a connection setup complete message from the user equipment, a resource allocation result is notified to the user equipment.

According to an embodiment of the present invention, the connection setup complete message may comprise one or more kinds of information. In the present invention, the connection setup complete message comprises a security identifier, wherein the security identifier is associated with a used encryption algorithm and a key of the encryption algorithm. In another embodiment of the present invention, the connection setup complete message may further comprise a connection identifier, wherein the connection identifier may represent an identifier of a tunnel which is once established by the base station and the gateway. In a further embodiment of the present invention, the connection setup complete message may further comprise a signature, wherein the signature may contain the identifier of the UE transmitting the connection setup complete message to the base station.

In the message sequence under a mobile-originated (MO) scenario shown in Fig.5, after the eNB transmits 504 to the UE an RRC connection setup message containing the SRB1 and DRB configuration, the UE transmits 505 to the eNB an RRC connection setup complete message which contains a security identifier, connection identifier and signature; the eNB allocates resources according to the information in the connection setup complete message, and notifies the resource allocation result to the user equipment, which is corresponding to the eNB sending 506 to the UE a uplink resource grant message in the example in Fig.5. Thereafter, data transmission may be performed between the UE and eNB and S-GW/P-GW, as shown in the transmission of UDP/IP packet in Fig.5. After data transmission is not performed for a period of time, resource may be released based on an inactivity timer and RRC connection may be released.

In the message sequence under a mobile-terminated (MT) scenario shown in Fig.6, after the eNB transmits 607 to the UE an RRC connection setup message containing the SRB1 and DRB configuration, the UE transmits to 608 the eNB an RRC connection setup complete message which contains a security identifier, connection identifier and signature; the eNB allocates resources according to the information in the connection setup complete message, and notifies the resource allocation result to the user equipment, which is corresponding to the eNB transmitting 609 to the UE an uplink resource grant message in the example in Fig.6. Thereafter, data transmission may be performed between the UE and eNB and S-GW/P-GW, as shown in the transmission of UDP/IP packet in Fig.6. After data transmission is not performed for a period of time, resource may be released based on an inactivity timer and RRC connection may be released.

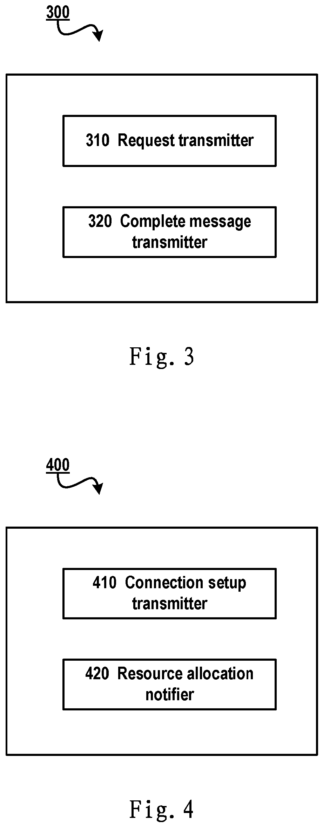

Fig.3 is a block diagram of a data transmission device 300 according to an embodiment of the present invention. The device 300 shown in Fig.3 may be implemented in user equipment or any other suitable equipment available for those skilled in the art.

In an embodiment according to the present invention, the device 300 may comprises: a request transmitter 310 configured to transmit a connection request containing a small data indicator to the base station; and a complete message transmitter configured to transmit a connection setup complete message to the base station to obtain a resource allocation result in response to reception of a connection setup message containing a signaling radio bearer and data radio bearer configuration from the base station.

According to the present invention, the connection setup complete message omprises a security identifier, wherein the security identifier is associated with a used encryption algorithm and a key of the encryption algorithm.

According to the present invention, the connection setup complete message comprises a connection identifier, wherein the connection identifier represents an identifier of a tunnel which is once established by the base station and the gateway.

According to an embodiment of the present invention, the connection setup complete message may further comprise a signature, wherein the signature may contain an identifier of the user equipment transmitting the connection setup complete message to the base station.

According to an embodiment of the present invention, the request transmitter 310 may comprise: a preamble transmitting unit configured to transmit an access preamble to the base station in response to reception of a paging message containing the small data indictor from the base station; and a connection request transmitting unit configured to transmit a connection request to the base station in response to reception of the response to the access preamble from the base station.

Fig.4 is a block diagram of a data transmission device 400 according to an embodiment of the present invention. The device 400 shown in Fig.4 may be implemented in a base station or any other suitable equipment available for those skilled in the art.

In an embodiment according to the present invention, the device 400 may comprises: a connection setup transmitter 410 configured to transmit a connection setup message containing a signaling radio bearer and data radio bearer configuration to the user equipment in response to reception of a connection request containing the small data indictor from the user equipment; and a resource allocation notifier 420 configured to notify a resource allocation result to the user equipment in response to reception of a connection setup complete message from the user equipment.

According to an embodiment of the present invention, the connection setup complete message may comprise a security identifier, wherein the security identifier is associated with a used encryption algorithm and a key of the encryption algorithm.

According to an embodiment of the present invention, the connection setup complete message may further comprise a connection identifier, wherein the connection identifier represents an identifier of a tunnel which is once established by the base station and the gateway.

According to an embodiment of the present invention, the connection setup complete message may further comprise a signature, wherein the signature contains an identifier of the user equipment.

According to an embodiment of the present invention, the device 400 may further comprise: a paging message transmitter (not shown) configured to transmit a paging message containing the small data indicator to the user equipment in response to reception of a paging notification containing the small data indicator from a mobility management entity, wherein the paging notification is transmitted by the mobility management entity to the base station in response to a downlink data notification containing the small data indicator from the gateway, and wherein the user equipment transmits an access preamble to the base station in response to reception of the paging message from the base station, and transmits the connection request to the base station in response to reception of the response to the access preamble from the base station.

It should be understood that the structural block diagrams of Fig.3 and Fig.4 are only for exemplification purpose and not intended to limit the present invention. In some cases, some means/units may be added or reduced therein according to needs.

The methods disclosed by the embodiments of the present invention may be implemented in software, hardware or the combination thereof. The hardware part may be implemented by a dedicated logic; the software part may be stored in a memory and executed by a proper instruction execution system such as a microprocessor, a personal computer (PC) or a mainframe. In preferred embodiments, the present invention is implemented as software, which includes, but is not limited to firmware, residence software and microcode or the like.

Moreover, the present invention may be implemented as a computer program product usable from computers or accessible by computer-readable media that provide program code for use by or in connection with a computer or any instruction executing system. For the purpose of description, a computer-usable or computer-readable medium may be any tangible means that may contain, store, communicate, propagate, or transport the program for use by or in connection with an instruction execution system, apparatus, or device.

The medium may be an electric, magnetic, optical, electromagnetic, infrared, or semiconductor system (apparatus or device), or propagation medium. Examples of the computer-readable medium would include the following: a semiconductor or solid storage device, a magnetic tape, a portable computer diskette, a random access memory (RAM), a read-only memory (ROM), a hard disk, and an optical disk. Examples of the current optical disk include a compact disk read-only memory (CD-ROM), compact disk-read/write (CR-ROM), and DVD.

A data processing system adapted for storing or executing program code according to the embodiments of the present invention would include at least one processor that is coupled to a memory element directly or via a system bus. The memory element may include a local memory usable during actually executing the program code, a mass memory, and a cache that provides temporary storage for at least one portion of program code so as to decrease the number of times for retrieving code from the mass memory during execution.

It should be noted that in order to make the embodiments of the present invention easier to understand, the above description omits some more specific technical details which are known to the skilled in the art and may be essential to implement the present invention.

The purpose for providing the description of the present invention is to explain and describe, not to exhaust or limit the present invention within the disclosed form. To a person of normal skill in the art, various modifications and alternations are obvious.

## Claims

1. A data transmission method, comprising:
transmitting a connection request (S101, 503, 606) containing a small data indicator to a base station;
receiving (504, 607), from the base station, a connection setup message containing a signaling radio bearer (SRB) and data radio bearer (DRB) configuration;
transmitting a connection setup complete message (S102, 505, 608) to the base station;
wherein the connection setup complete message (S102, 505, 608) comprises a security identifier, wherein the security identifier is associated with a used encryption algorithm and a key of the encryption algorithm.

2. The method according to claim 1, wherein the connection setup complete message (S102) further comprises a connection identifier, wherein the connection identifier represents an identifier of a tunnel which is once established by the base station and a gateway.

3. The method according to claim 1 or 2, wherein the connection setup complete message (S102) further comprises a signature, wherein the signature contains an identifier of the user equipment transmitting the connection setup complete message to the base station.

4. The method according to claim 1, wherein transmitting a connection request (S101) containing a small data indicator to a base station comprises:
transmitting an access preamble to the base station in response to reception of a paging message containing the small data indictor from the base station; and
transmitting the connection request to the base station in response to reception of the response to the access preamble from the base station.

5. A data transmission method, comprising:
transmitting a connection setup message (S201, 504, 607) containing a signaling radio bearer and data radio bearer configuration to user equipment, in response to reception (503, 606) of a connection request containing a small data indicator from the user equipment; and
notifying (506, 609) an uplink resource grant to the user equipment in response to reception of a connection setup complete message (505, 608) from the user equipment (S202),
wherein the connection setup complete message (S202) comprises a security identifier, wherein the security identifier is associated with a used encryption algorithm and a key of the encryption algorithm.

6. The method according to claim 5, wherein the connection setup complete message (S202) further comprises a connection identifier, wherein the connection identifier represents an identifier of a tunnel which is once established by the base station and a gateway.

7. The method according to claim 5 or 6, wherein the connection setup complete message (S202) further comprises a signature, wherein the signature comprises an identifier of the user equipment.

8. The method according to claim 5, further comprising:
transmitting a paging message (602) containing the small data indicator to the user equipment in response to reception of a paging notification (601) containing the small data indicator from a mobility management entity,
wherein the paging notification (601) is transmitted by the mobility management entity to the base station in response to a downlink data notification containing the small data indicator from a gateway, and
wherein the user equipment transmits an access preamble (604) to the base station in response to reception of the paging message (603) from the base station, and transmits the connection request (606) to the base station in response to reception of the response to the access preamble (605) from the base station.

9. A data transmission device (300), comprising:
a request transmitter (310) configured to transmit a connection request containing a small data indicator to a base station; and
a complete message transmitter (320) configured to transmit a connection setup complete message to the base station to obtain an uplink resource grant in response to reception of a connection setup message containing a signaling radio bearer and data radio bearer configuration from the base station;
wherein the connection setup complete message comprises a security identifier, the security identifier being associated with a used encryption algorithm and a key of the encryption algorithm.

10. A data transmission device (400), comprising:
a connection setup transmitter (410) configured to transmit a connection setup message containing a signaling radio bearer and data radio bearer configuration to user equipment in response to reception of a connection request containing the small data indictor from the user equipment; and
a resource allocation notifier (420) configured to notify an uplink resource grant to the user equipment in response to reception of a connection setup complete message from the user equipment;
wherein the connection setup complete message comprises a security identifier, the security identifier being associated with a used encryption algorithm and a key of the encryption algorithm.

11. Device according to claim 9, implemented in a user equipment.

12. Device according to claim 10; implemented in a base station.

## Patentansprüche

1. Datenübertragungsverfahren, das Folgendes umfasst:
Übertragen einer Verbindungsanforderung (S101, 503, 606), die einen Kleindatenindikator enthält, zu einer Basisstation;
Empfangen (504, 607) einer Verbindungsaufbaunachricht, die eine Signalisierungsfunkträger(SRB)- und eine Datenfunkträger(DRB)-Auslegung enthält, von der Basisstation;
Übertragen einer Verbindungsaufbauabschlussnachricht (S102, 505, 608) zur Basisstation;
wobei die Verbindungsaufbauabschlussnachricht (S102, 505, 608) eine Sicherheitskennung umfasst, wobei die Sicherheitskennung mit einem verwendeten Verschlüsselungsalgorithmus und einem Schlüssel des Verschlüsselungsalgorithmus verknüpft ist.

2. Verfahren nach Anspruch 1, wobei die Verbindungsaufbauabschlussnachricht (S102) ferner eine Verbindungskennung umfasst, wobei die Verbindungskennung eine Kennung eines Tunnels repräsentiert, der einmal von der Basisstation und einem Gateway eingerichtet wird.

3. Verfahren nach Anspruch 1 oder 2, wobei die Verbindungsaufbauabschlussnachricht (S102) ferner eine Signatur umfasst, wobei die Signatur eine Kennung der Teilnehmereinrichtung enthält, die die Verbindungsaufbauabschlussnachricht zur Basisstation überträgt.

4. Verfahren nach Anspruch 1, wobei das Übertragen einer Verbindungsanforderung (S101), die einen Kleindatenindikator enthält, zu einer Basisstation Folgendes umfasst:
Übertragen einer Zugangspräambel zur Basisstation in Reaktion auf den Empfang einer Pagingnachricht, die den Kleindatenindikator enthält, von der Basisstation; und
Übertragen der Verbindungsanforderung zur Basisstation in Reaktion auf den Empfang der Antwort auf die Zugangspräambel von der Basisstation.

5. Datenübertragungsverfahren, das Folgendes umfasst:
Übertragen einer Verbindungsaufbaunachricht (S201, 504, 607), die eine Signalisierungsfunkträger- und eine Datenfunkträgerauslegung enthält, zu einer Teilnehmereinrichtung in Reaktion auf den Empfang (503, 606) einer Verbindungsanforderung, die einen Kleindatenindikator enthält, von der Teilnehmereinrichtung; und
Benachrichtigen (506, 609) der Teilnehmereinrichtung über eine Uplinkressourcengewährung in Reaktion auf den Empfang einer Verbindungsaufbauabschlussnachricht (505, 608) von der Teilnehmereinrichtung (S202),
wobei die Verbindungsaufbauabschlussnachricht (S202) eine Sicherheitskennung umfasst, wobei die Sicherheitskennung mit einem verwendeten Verschlüsselungsalgorithmus und einem Schlüssel des Verschlüsselungsalgorithmus verknüpft ist.

6. Verfahren nach Anspruch 5, wobei die Verbindungsaufbauabschlussnachricht (S202) ferner eine Verbindungskennung umfasst, wobei die Verbindungskennung eine Kennung eines Tunnels repräsentiert, der einmal von der Basisstation und einem Gateway eingerichtet wird.

7. Verfahren nach Anspruch 5 oder 6, wobei die Verbindungsaufbauabschlussnachricht (S202) ferner eine Signatur umfasst, wobei die Signatur eine Kennung der Teilnehmereinrichtung umfasst.

8. Verfahren nach Anspruch 5, das ferner Folgendes umfasst:
Übertragen einer Pagingnachricht (602), die den Kleindatenindikator enthält, zur Teilnehmereinrichtung in Reaktion auf den Empfang einer Pagingbenachrichtigung (601), die den Kleindatenindikator enthält, von einer Mobilitätsverwaltungsentität,
wobei die Pagingbenachrichtigung (601) von der Mobilitätsverwaltungsentität in Reaktion auf eine Downlinkdatenbenachrichtigung, die den Kleindatenindikator enthält, von einem Gateway, zur Basisstation übertragen wird, und
wobei die Teilnehmereinrichtung in Reaktion auf den Empfang der Pagingnachricht (603) von der Basisstation eine Zugangspräambel (604) zur Basisstation überträgt und in Reaktion auf den Empfang der Antwort auf die Zugangspräambel (605) von der Basisstation die Verbindungsanforderung (606) zur Basisstation überträgt.

9. Datenübertragungsvorrichtung (300), die Folgendes umfasst:
einen Anforderungssender (310), der dazu ausgelegt ist, eine Verbindungsanforderung, die einen Kleindatenindikator enthält, zu einer Basisstation zu übertragen; und
einen Abschlussnachrichtensender (320), der dazu ausgelegt ist, eine Verbindungsaufbauabschlussnachricht zur Basisstation zu übertragen, um in Reaktion auf den Empfang einer Verbindungsaufbaunachricht, die eine Signalisierungsfunkträger- und eine Datenfunkträgerauslegung enthält, von der Basisstation eine Uplinkressourcengewährung zu erhalten;
wobei die Verbindungsaufbauabschlussnachricht eine Sicherheitskennung umfasst, wobei die Sicherheitskennung mit einem verwendeten Verschlüsselungsalgorithmus und einem Schlüssel des Verschlüsselungsalgorithmus verknüpft ist.

10. Datenübertragungsvorrichtung (400), das Folgendes umfasst:
einen Verbindungsaufbausender (410), der dazu ausgelegt ist, in Reaktion auf den Empfang einer Verbindungsanforderung, die den Kleindatenindikator enthält, von der Teilnehmereinrichtung eine Verbindungsaufbaunachricht, die eine Signalisierungsfunkträger- und eine Datenfunkträgerauslegung enthält, zu einer Teilnehmereinrichtung zu übertragen; und
einen Ressourcenzuteilungsbenachrichtiger (420), der dazu ausgelegt ist, in Reaktion auf den Empfang einer Verbindungsaufbauabschlussnachricht von der Teilnehmereinrichtung die Teilnehmereinrichtung über eine Uplinkressourcengewährung zu benachrichtigen;
wobei die Verbindungsaufbauabschlussnachricht eine Sicherheitskennung umfasst, wobei die Sicherheitskennung mit einem verwendeten Verschlüsselungsalgorithmus und einem Schlüssel des Verschlüsselungsalgorithmus verknüpft ist.

11. Vorrichtung nach Anspruch 9, die in einer Teilnehmereinrichtung implementiert wird.

12. Vorrichtung nach Anspruch 10; die in einer Basisstation implementiert wird.

## Revendications

1. Procédé de transmission de données, comprenant :
la transmission d'une demande de connexion (S101, 503, 606) contenant un indicateur de petites données à une station de base ;
la réception (504, 607), à partir de la station de base, d'un message d'installation de connexion contenant une configuration de support radio de signalisation (SRB) et de support radio de données (DRB) ;
la transmission d'un message de fin d'installation de connexion (S102, 505, 608) à la station de base ;
dans lequel le message de fin d'installation de connexion (S102, 505, 608) comprend un identifiant de sécurité, dans lequel l'identifiant de sécurité est associé à un algorithme de chiffrement utilisé et à une clé de l'algorithme de chiffrement.

2. Procédé selon la revendication 1, dans lequel le message de fin d'installation de connexion (S102) comprend en outre un identifiant de connexion, dans lequel l'identifiant de connexion représente un identifiant d'un tunnel qui est établi une fois par la station de base et une passerelle.

3. Procédé selon la revendication 1 ou 2, dans lequel le message de fin d'installation de connexion (S102) comprend en outre une signature, dans lequel la signature contient un identifiant de l'équipement utilisateur transmettant le message de fin d'installation de connexion à la station de base.

4. Procédé selon la revendication 1, dans lequel la transmission d'une demande de connexion (S101) contenant un indicateur de petites données à une station de base comprend :
la transmission d'un préambule d'accès à la station de base en réponse à la réception d'un message de radiomessagerie contenant l'indicateur de petites données à partir de la station de base ; et
la transmission de la demande de connexion à la station de base en réponse à la réception de la réponse au préambule d'accès à partir de la station de base.

5. Procédé de transmission de données, comprenant :
la transmission d'un message d'installation de connexion (S201, 504, 607) contenant une configuration de support radio de signalisation et de support radio de données à un équipement utilisateur, en réponse à la réception (503, 606) d'une demande de connexion contenant un indicateur de petites données à partir de l'équipement utilisateur ; et
la notification (506, 609) d'un octroi de ressources de liaison montante à l'équipement utilisateur en réponse à la réception d'un message de fin d'installation de connexion (505, 608) à partir de l'équipement utilisateur (S202),
dans lequel le message de fin d'installation de connexion (S202) comprend un identifiant de sécurité, dans lequel l'identifiant de sécurité est associé à un algorithme de chiffrement utilisé et à une clé de l'algorithme de chiffrement.

6. Procédé selon la revendication 5, dans lequel le message de fin d'installation de connexion (S202) comprend en outre un identifiant de connexion, dans lequel l'identifiant de connexion représente un identifiant d'un tunnel qui est établi une fois par la station de base et une passerelle.

7. Procédé selon la revendication 5 ou 6, dans lequel le message de fin d'installation de connexion (S202) comprend en outre une signature, dans lequel la signature comprend un identifiant de l'équipement utilisateur.

8. Procédé selon la revendication 5, comprenant en outre :
la transmission d'un message de radiomessagerie (602) contenant l'indicateur de petites données à l'équipement utilisateur en réponse à la réception d'une notification de radiomessagerie (601) contenant l'indicateur de petites données à partir d'une entité de gestion de la mobilité,
dans lequel la notification de radiomessagerie (601) est transmise par l'entité de gestion de la mobilité à la station de base en réponse à une notification de données de liaison descendante contenant l'indicateur de petites données provenant d'une passerelle, et
dans lequel l'équipement utilisateur transmet un préambule d'accès (604) à la station de base en réponse à la réception du message de radiomessagerie (603) à partir de la station de base, et transmet la demande de connexion (606) à la station de base en réponse à la réception de la réponse au préambule d'accès (605) à partir de la station de base.

9. Dispositif de transmission de données (300), comprenant :
un émetteur de demande (310) configuré pour transmettre une demande de connexion contenant un indicateur de petites données à une station de base ; et
un émetteur de message de fin (320) configuré pour transmettre un message de fin d'installation de connexion à la station de base pour obtenir un octroi de ressources de liaison montante en réponse à la réception d'un message d'installation de connexion contenant une configuration de support radio de signalisation et de support radio de données provenant de la station de base ;
dans lequel le message de fin d'installation de connexion comprend un identifiant de sécurité, l'identifiant de sécurité étant associé à un algorithme de chiffrement utilisé et à une clé de l'algorithme de chiffrement.

10. Dispositif de transmission de données (400), comprenant :
un émetteur d'installation de connexion (410) configuré pour transmettre un message d'installation de connexion contenant une configuration de support radio de signalisation et de support radio de données à un équipement utilisateur en réponse à la réception d'une demande de connexion contenant l'indicateur de petites données à partir de l'équipement utilisateur ; et
un notificateur d'attribution de ressources (420) configuré pour notifier un octroi de ressources de liaison montante à l'équipement utilisateur en réponse à la réception d'un message de fin d'installation de connexion à partir de l'équipement utilisateur ;
dans lequel le message de fin d'installation de connexion comprend un identifiant de sécurité, l'identifiant de sécurité étant associé à un algorithme de chiffrement utilisé et à une clé de l'algorithme de chiffrement.

11. Dispositif selon la revendication 9, mis en œuvre dans un équipement utilisateur.

12. Dispositif selon la revendication 10 ; mis en œuvre dans une station de base.
